# EUROPEAN PATENT APPLICATION

(11) **EP 2 891 602 A1**
(43) Date of publication of application: **08.07.2015**
(21) Application number: 14150060.3
(22) Date of filing: 02.01.2014
(51) Int. Cl.: B62M 17/00, B62M 6/40

(54) **Electromotive auxiliary power assembly for chainless shaft-power-transfer bicycles**

(71) Applicant: NEW KAILUNG GEAR CO., LTD., Kaohsiung (TW)
(72) Inventor: Liu, Jen-Chih, Kaohsiung (CN)
(74) Representative: Treeby, Philip David William

(57) **Abstract**

An electromotive auxiliary power assembly for a chainless shaft-power-transfer bicycle comprising: a frame (1), a crank assembly (2), a crank (21), a power transfer shaft (3) between the crank assembly (2) and a passive gear (4) of a rear wheel hub of the bicycle, and a motor set (5) for providing auxiliary power; the auxiliary power of the motor set (5) being directly transferred to the power transfer shaft (3) through a gear set instead of by other components of the chainless bicycle. The motor set is installed on the power transfer shaft between the crank assembly and the passive gear set of the rear wheel hub. Even the motor set is installed on the power transfer shaft extending from a crank shaft of the crank assembly. Furthermore, The power output shaft of the motor set is coaxial or non-coaxial with, parallel or non-parallel with , or penetrates through or non-penetrates through the power transfer shaft.

## Description

### FIELD OF THE INVENTION

The present invention relates to power structures for chainless bicycles, and in particular to an electromotive auxiliary power assembly for chainless shaft-power-transfer bicycles.

### BACKGROUND OF THE INVENTION

Current power transfer of bicycles has two different forms, one uses a chain for power transfer, and another is chainless. The trading power of a driver applied to a crank of a bicycle is transferred to the rear wheel by a chain or chainlessly so as to drive the bicycle to move.

As a bicycle moves, the driver will feel tired because of variation of topography or physical strength of the driver. Therefore, a motor assistant bicycle is developed for chain-used bicycles so that the user can select to drive the bicycle by manpower or a motor. However, this kind of bicycles is mainly used for chain used bicycles. The power from the motor is inputted from the crank shaft of the bicycle. Then the power is transferred to the rear wheel through the chain. However, the above mentioned prior art is aimed to the chain bicycles, while no structure is aimed at chainless bicycles.

Therefore, the present invention hopes to develop an electromotive auxiliary power assembly for a chainless shaft-power-transfer bicycle, which can improve the defects in the prior art.

### SUMMARY OF THE INVENTION

To improve above mentioned object, the present invention provides a electromotive auxiliary power assembly for a chainless shaft-power-transfer bicycle, wherein the present invention actually provides auxiliary power to the chainless bicycles. Auxiliary power of the motor of a chainless bicycle is directly transferred to the power transfer shaft through a gear set instead of by the crank assembly or a wheel hub etc.). The power from the motor set directly applies to the power transfer shaft to reduce the power lose in transfer so as to achieve the object of power saving. Therefore, the present invention is highly usable with less components and only small space is needed and thus the cost is low.

To achieve above object, the present invention provides an electromotive auxiliary power assembly for a chainless shaft-power-transfer bicycle comprising: a frame, a crank assembly, a crank, a power transfer shaft between the crank assembly and the passive gear of the rear wheel hub, and a motor set for providing auxiliary power; the auxiliary power of the motor set being directly transferred to the power transfer shaft through a gear set instead of by other components of the chainless bicycle. The motor set is installed on the power transfer shaft between the crank assembly and the passive gear set of the rear wheel hub. Even the motor set is installed on the power transfer shaft extending from a crank shaft of the crank assembly. Furthermore, The power output shaft of the motor set is coaxial or non-coaxial with, parallel or non-parallel with , or penetrates through or non-penetrates through the power transfer shaft.

### BRIEF DESCRIPTION OF THE DRAWINGS:

Fig. 1 is a schematic view about a chainless bicycle.
Fig. 2 is a schematic view showing the arrangement of the power transfer path of the electromotive auxiliary power according to the present invention.
Fig. 3 shows another arrangement of the structure of the present invention.
Fig. 4 shows an embodiment about a penetrating coaxial embodiment in Fig. 2.
Fig. 5 shows an embodiment about a non-penetrating coaxial embodiment in Fig. 2.
Fig. 6 shows an embodiment about a non-penetrating parallel-axis embodiment in Fig. 2.
Fig. 7 shows an embodiment about a non-penetrating non-parallel-axis embodiment in Fig. 2.

### DETAILED DESCRIPTION OF THE IVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

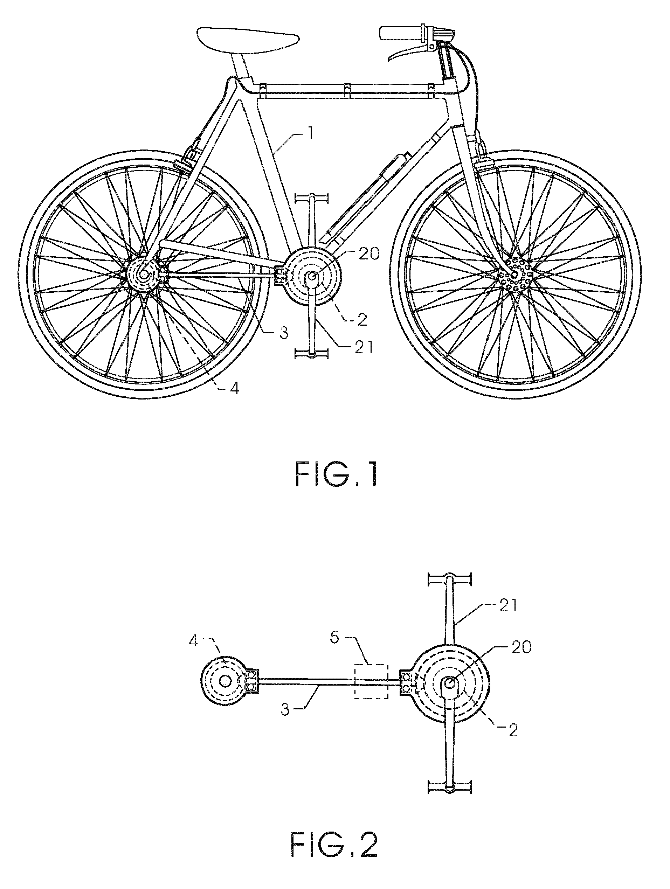

With reference to Figs. 1 to 7, the electromotive power auxiliary device according to the present invention is illustrated. In the present invention, the auxiliary power of the motor of a chainless bicycle is directly transferred to the power transfer shaft through a gear set instead of by the crank assembly or a wheel hub etc. )

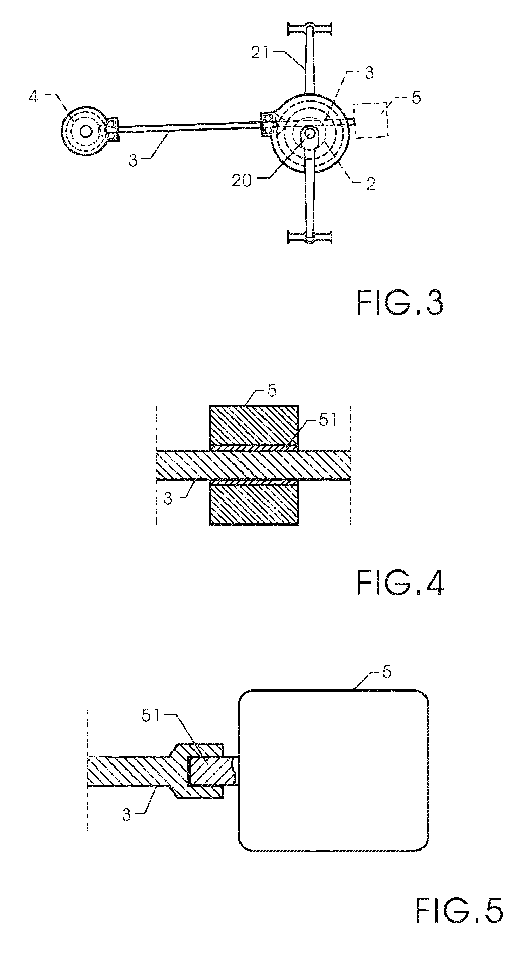

With reference to Fig. 1 to 7, the structure of the present invention is illustrated. In that a chainless power transfer bicycle includes a frame 1, a crank assembly 2, a crank 21, and a power transfer shaft 3 between the crank assembly 2 and the passive gear set 4 of the rear wheel hub. As illustrated in Fig. 2, the auxiliary power transfer assembly of the present invention includes a motor set 5 (including a motor having a gear set (may be neglected) and other means), a motor power output shaft 51 and a power transfer shaft 3 installed between the crank assembly 2 and the passive gear set 4 of the rear wheel hub. The motor set 5 is installed on the power transfer shaft 3. There are two positions suitable for installing the motor set. In one position, the motor set 5 is installed on the power transfer shaft 3 between the crank assembly 2 and the passive gear set 4 of the rear wheel hub as illustrated in Fig. 2. With reference to Fig. 3, in this embodiment, the motor set 5 is installed on a section of the power transfer set 3 extending out of the crank set 20 of the crank assembly 2.

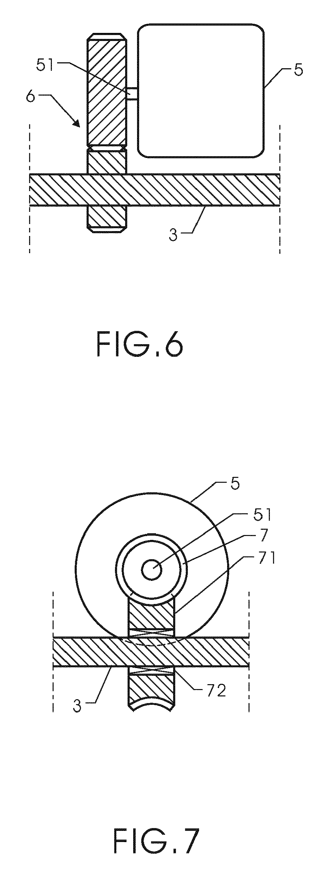

With reference to Figs. 4 and 7, the power output shaft 5 of the motor set 5 may be coaxial or non-coaxial with the power transfer shaft 3. For coaxial arrangement, it may be a form of penetration (referring to Fig. 4) or non-penetration (referring to Fig. 5). For non-coaxial arrangement, it may be a form of penetration (referring to Fig. 6 and non-penetration (referring to Fig. 7).

With reference to Fig. 4, the power output shaft 51 of the motor set 5 is a penetrated coaxial form. In that the power transfer shaft 3 penetrates through the power output shaft 51 of the motor set 5. The power transfer shaft 3 may be integrally formed with the power output shaft 51 of the motor set 5 or is assembled to the power output shaft 51 of the motor set 5 by studs.

With reference to Fig. 5, in that the power output shaft 51 of the motor set 5 is coaxial with the power transfer shaft 3, but do not penetrate through the power transfer shaft 3. The power output shaft 51 of the motor set 5 is engaged to the power transfer shaft 3 through studs, keys or pins.

Referring to Fig. 6, it is illustrated that the power output shaft 51 of the motor set 5 is parallel to the power transfer shaft 3 and thus the power output shaft 51 does not penetrate through the power transfer shaft 3. The power output shaft 51 of the motor set 5 is engaged to the power transfer shaft 3 through gear set 6 (such as a round post like gear set or other kinds of gear sets.)

With reference to Fig. 7, it is illustrated that the power output shaft 51 of the motor set 5 is not parallel to the power transfer shaft 3 and do not penetrate through the power transfer shaft 3. A worm stud 7 or a worm gear set 71 (or a helical gear set, an umbrella gear set, or a plane gear set) is used to assemble the power output shaft 51 to the power transfer shaft 3. A one way bearing 72 is installed between the power transfer shaft 3 and the worm gear set 71. By the one way bearing 72, the torque outputted from the crank assembly 2 will not feedback to the motor set 5 itself to increase the manpower for driving the bicycle.

Advantages of the present invention are that the present invention actually provides auxiliary power to the chainless bicycles. Auxiliary power of the motor of a chainless bicycle is directly transferred to the power transfer shaft through a gear set instead of by the crank assembly or a wheel hub etc.). The power from the motor set directly applies to the power transfer shaft to reduce the power lose in transfer so as to achieve the object of power saving. Therefore, the present invention is highly usable with less components and only small space is needed and thus the cost is low.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. An electromotive auxiliary power assembly for a chainless shaft-power-transfer bicycle comprising: a frame (1), a crank assembly (2), a crank (21), a power transfer shaft (3) between the crank assembly (2) and a passive gear set (4) of a rear wheel hub, and a motor set (5) for providing auxiliary power; the auxiliary power of the motor set (5) being directly transferred to the power transfer shaft (3) through a gear set (6) instead of by other components of the chainless bicycle.

2. The electromotive auxiliary power assembly for a chainless shaft-power-transfer bicycle as claimed in claim 1, wherein the motor set (5) is installed on the power transfer shaft (3) between the crank assembly (2) and the passive gear set (4) of the rear wheel hub.

3. The electromotive auxiliary power assembly for a chainless shaft-power-transfer bicycle as claimed in claim 1, wherein the motor set (5) is installed on the power transfer shaft (3) extending from a crank shaft of the crank assembly (2).

4. The electromotive auxiliary power assembly for a chainless shaft-power-transfer bicycle as claimed in claim 1, wherein a power output shaft (3) of the motor set (5) is coaxial with the power transfer shaft (3).

5. The electromotive auxiliary power assembly for a chainless shaft-power-transfer bicycle as claimed in claim 1, wherein a power output shaft (51) of the motor set (5) is non-coaxial with the power transfer shaft (3).

6. The electromotive auxiliary power assembly for a chainless shaft-power-transfer bicycle as claimed in claim 1, wherein the power transfer shaft (3) is coaxial with and penetrates through a power output shaft (51) of the motor set (5).

7. The electromotive auxiliary power assembly for a chainless shaft-power-transfer bicycle as claimed in claim 1, wherein the power transfer shaft (3) is parallel with and non-penetrated through a power output shaft (51) of the motor set (5); and the power output shaft (51) of the motor set (5) is engaged to the power transfer shaft (3) by a gear set.

8. The electromotive auxiliary power assembly for a chainless shaft-power-transfer bicycle as claimed in claim 7, wherein the gear set includes cylinder gears or other engaging gears.

9. The electromotive auxiliary power assembly for a chainless shaft-power-transfer bicycle as claimed in claim 1, wherein the power output shaft (51) of the motor set (5) is not parallel to the power transfer shaft (3) and does not penetrate through the power transfer shaft (3); a worm stud (7) or a worm gear set (71) is used to assemble the power output shaft (51) to the power transfer shaft (3); and a one way bearing (72) is installed between the power transfer shaft (3) and the worm gear set (71).

10. The electromotive auxiliary power assembly for a chainless shaft-power-transfer bicycle as claimed in claim 9, wherein the worm gear set (71) is one of a helical gear set, an umbrella gear set and a plane gear set.
